# EUROPEAN PATENT SPECIFICATION

(11) **EP 3 251 389 B1**
(45) Date of publication and mention of the grant of the patent: **05.08.2020**
(21) Application number: 16706451.8
(22) Date of filing: 21.01.2016
(51) Int. Cl.: H04W 4/24, H04W 72/04, H04W 16/14

(54) **DIFFERENTIAL CHARGING FOR DATA USAGE IN LICENSED AND UNLICENSED FREQUENCY BANDS**
DIFFERENTIELLES LADEN FÜR DATENNUTZUNG BEI LIZENZIERTEN UND UNLIZENZIERTEN FREQUENZBÄNDERN
FACTURATION DIFFÉRENTIELLE POUR L'UTILISATION DE DONNÉES DANS DES BANDES DE FRÉQUENCES SOUS LICENCE ET SANS LICENCE

(30) Priority: 28.01.2015 US 201514607790
(43) Date of publication of application: 06.12.2017
(73) Proprietor: Alcatel Lucent, 91620 Nozay (FR)
(72) Inventor: KHAWER, Mohammad, Murray Hill, NJ 07974-0636 (US); CAI, Yigang, Naperville, IL 60563-1594 (US); SONI, Robert, Murray Hill, NJ 07974-0636 (US)
(74) Representative: Louis Pöhlau Lohrentz
(86) International application number: PCT/US2016/014224
(87) International publication number: WO 2016/122953

(56) References cited:
- WO-A1-2013/113387
- US-A1- 2011 294 435

## Description

### BACKGROUND

### Field of the Disclosure

The present disclosure relates generally to wireless communication systems and, more particularly, to licensed and unlicensed frequency bands in wireless communication systems.

### Description of the Related Art

The demand for mobile wireless data has been growing at an exponential rate and is expected to continue to grow by many orders of magnitude in the coming years. Meeting the increasing demand will require a corresponding increase in the amount of spectrum available for wireless communication. The available spectrum can be increased by combining licensed frequency bands with unlicensed frequency bands. Unlicensed frequency bands are portions of the radiofrequency spectrum that do not require a license for use and may therefore be used by any device to transmit or receive radio frequency signals. For example, the Unlicensed National information Infrastructure (UNII) is formed of portions of the radio spectrum that include frequency bands in the range of 5.15 GHz to 5.825 GHz such as the U-NII-1 band in the range 5.15-5.25 GHz, the U-NII 2a, b, c bands in the range 5.25-5.725 GHz, and the U-NII 3 band in the range 5.725-5.825 GHz. Unlicensed frequency bands can be contrasted to licensed frequency bands that are licensed to a particular service provider and may only be used for wireless communication that is authorized by the service provider.

WO 2013/113387 A1 describes a method to allocate licensed and unlicensed resources to subscribers. Licensed and unlicensed resources may be combined to employ carrier aggregation, in particular implemented by a Radio Network Controller. The charging policy may induce less costs using unlicensed frequency bands.

US 2011/294435 A1 describes a policy determination function, PDF, which makes policy and charging control decisions based on radio spectrum blocks. The PDF receives radio spectrum block data, determines a frist radio spectrum block for a subscriber session and a corresponding set of policy and charging control rules.

### SUMMARY OF EMBODIMENTS

The following presents a simplified summary of the disclosed subject matter in order to provide a basic understanding of some aspects of the disclosed subject matter. This summary is not an exhaustive overview of the disclosed subject matter. It is not intended to identify key or critical elements of the disclosed subject matter or to delineate the scope of the disclosed subject matter. Its sole purpose is to present some concepts in a simplified form as a prelude to the more detailed description that is discussed later. The scope of the disclosed subject matter is defined in the attached claims.

In some embodiments, a method is provided for supporting differential charging for data usage in licensed and unlicensed frequency bands. The method includes receiving, at a base station, a charging policy indicating data usage tariffs for licensed and unlicensed frequency bands. The method also includes selectively allocating, at the base station, one or more of the licensed or unlicensed frequency bands to user equipment based on the data usage tariffs.

In some embodiments a method is provided for creating charging policies to support differential charging for data usage in licensed and unlicensed frequency bands. The method includes transmitting, from a network charging system, a charging policy indicating data usage tariffs for licensed and unlicensed frequency bands. The method also includes receiving, at the network charging system, a message including charging parameters for data usage by one or more of the licensed or unlicensed frequency bands that are selectively allocated based on the charging policy.

In some embodiments, a non-transitory computer readable medium is provided embodying a set of executable instructions that support differential charging for data usage in licensed and unlicensed frequency bands. The set of executable instructions is to manipulate a processor to receive a charging policy indicating data usage tariffs for licensed and unlicensed frequency bands and selectively allocate one or more of the licensed or unlicensed frequency bands to user equipment based on the data usage tariffs.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a diagram of a wireless communication system according to some embodiments.
FIG. 2 is a block diagram of a network charging system according to some embodiments.
FIG. 3 is a flow diagram of a method for differential charging for data usage in licensed and unlicensed frequency bands according to some embodiments.
FIG. 4 is a block diagram of a message that may be transmitted between a small cell and a network charging system according to some embodiments.
FIG. 5 is a block diagram of a wireless communication system according to some embodiments.

### DETAILED DESCRIPTION

The cost of providing wireless data over licensed frequency bands differs from the cost of providing wireless data over unlicensed frequency bands. However, there is no mechanism in place for differentially charging users for data transmitted over licensed and unlicensed frequency bands. At least in part to address this drawback in the conventional practice, wireless communication systems can be configured to support differential charging for wireless data transmitted over licensed frequency bands and unlicensed frequency bands using base stations that selectively allocate licensed frequency bands and unlicensed frequency bands to user equipment based on data usage tariffs indicated in charging policies provided to the base stations by the wireless communication system. Selectively allocating the licensed or unlicensed frequency bands based on the data usage tariffs may be referred to as "smart pricing." Some embodiments of the base stations may be small cells that receive the charging policies from a core network charging and policy element. The charging policies may include an expiration timer that is used to indicate a valid duration of the charging policy.

Some embodiments of base stations implement a policy engine that determines whether to transmit data associated with a session over a licensed frequency band or an unlicensed frequency band based on a comparison of tariffs indicated in a charging policy. For example, a base station may hand over best effort data transmission for the session from a licensed frequency band to an unlicensed frequency band in response to the policy engine determining that a tariff for the unlicensed frequency band is less than a tariff for the licensed frequency band. The session is indicated by a single session identifier, regardless of whether the data is transmitted in the licensed or unlicensed frequency band. The base station may therefore collect and send charging parameters for the session (such as data usage, an indication of whether the data was transmitted in licensed or unlicensed frequency bands, a handover indicator, and the like) to a network charging system, which can determine the charges and charge them to the correct user based on the session identifier.

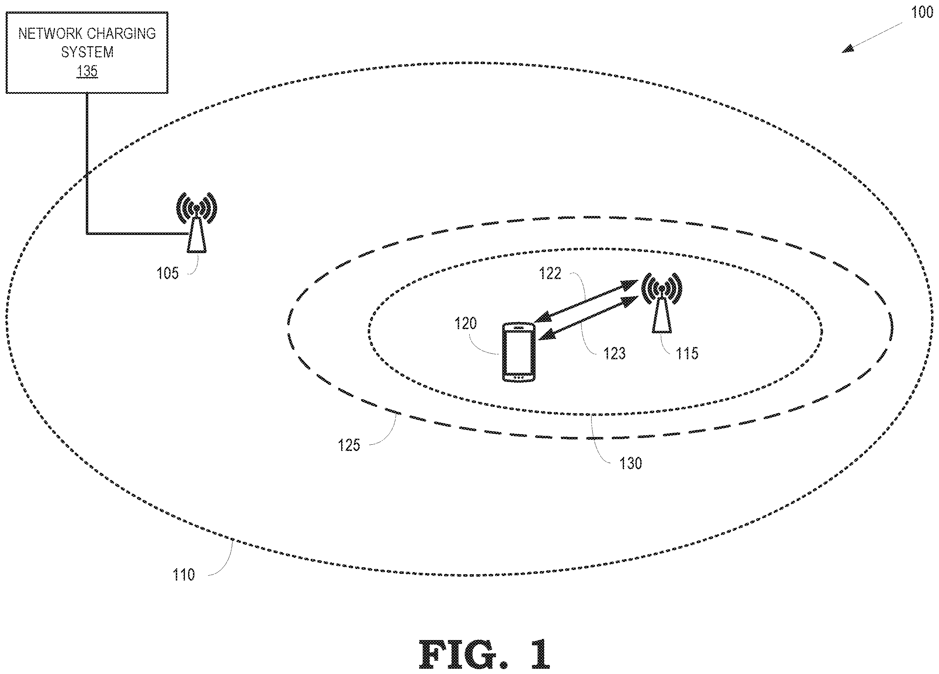

FIG. 1 is a diagram of a wireless communication system 100 according to some embodiments. The wireless communication system 100 includes one or more eNodeBs 105 that provide wireless connectivity according to a first radio access technology, e.g., according to the Long Term Evolution (LTE) standards defined by the Third Generation Partnership Project (3GPP). The eNodeB 105 provides wireless connectivity within a first geographical area or cell 110. The wireless communication system 100 also includes one or more small cells 115 that provide wireless connectivity according to the first radio access technology. As used herein, the term "base station" may be used to indicate eNodeBs that are part of a macrocellular network or small cells that overlay the macrocellular network. Small cells may also be referred to as home base station routers, metrocells, microcells, picocells, femtocells, and the like.

The small cell 115 may provide uplink or downlink communications to user equipment 120 over one or more carriers 122 in a licensed frequency band within the cell indicated by the dashed oval 125. The licensed carriers 122 may be referred to as LTE licensed (LTE-L) carriers. The small cell 115 may also support wireless connectivity over carriers 123 in one or more unlicensed frequency bands within a cell indicated by the dashed oval 130. The unlicensed carriers 123 may be referred to as LTE unlicensed (LTE-U) carriers. The unlicensed frequency bands may include the Unlicensed National Information Infrastructure (UNII), which is formed of portions of the radio spectrum that include frequency bands in the range of 5.15 GHz to 5.825 GHz such as the U-NII-1 band in the range 5.15-5.25 GHz, the U-NII 2a, b, c bands in the range 5.25-5.725 GHz, and the U-NII 3 band in the range 5.725-5.825 GHz. In some embodiments, the transmission power used by the small cell 115 to transmit signals in the licensed frequency band is larger than the transmission power used by the small cell 115 to transmit signals in the unlicensed frequency band. Consequently, the cell 125 is larger than the cell 130 in FIG. 1.

The small cell 115 may operate one or more of the unlicensed carriers 123 in different operating modes. For example, the small cell 115 may implement a supplemental downlink carrier in the unlicensed frequency band. The supplemental downlink carrier is used to carry best effort downlink data from the small cell 115 to the user equipment 120. A primary carrier is anchored in the licensed frequency band and is used to carry control data for the supplemental downlink carrier, as well as uplink data from the user equipment 120 to the small cell 115. For another example, the small cell 115 may implement a carrier aggregation mode in which a secondary carrier in the unlicensed frequency band carries both uplink and downlink best effort data. A primary carrier is anchored in the licensed frequency band and is used to carry control data for the secondary carrier.

As discussed herein, data usage tariffs may differ for data transmitted on the carrier 122 in the licensed frequency bands and data transmitted on the carrier 123 in the unlicensed frequency bands. The wireless communication system 100 can therefore be configured to support differential charging for wireless data transmitted over licensed frequency bands and unlicensed frequency bands. Some embodiments of the small cell 115 can selectively allocate licensed frequency bands and unlicensed frequency bands to user equipment 120 based on data usage tariffs indicated in charging policies provided to the small cell 115. The charging policies may be generated by a network charging system 135 such as an LTE core network policy and charging control entity. The charging policies may include an expiration timer that is used to indicate a valid duration of the charging policy. Although the selective allocation is performed in the small cell 115 in the embodiment shown in FIG. 1, selective allocation as described herein may be performed by other types of base stations in some embodiments.

Some embodiments of the small cell 115 implement a policy engine that determines whether to transmit data associated with a session over the carrier 122 in the licensed frequency band or the carrier 123 in the unlicensed frequency band based on a comparison of tariffs indicated in a charging policy. For example, the small cell 115 may hand over best effort data transmission for the session from the carrier 122 to the carrier 123 in response to the policy engine determining that a tariff for the unlicensed frequency band is less than a tariff for the licensed frequency band. The small cell 115 can collect and send charging parameters for the session (such as data usage, an indication of whether the data was transmitted in licensed or unlicensed frequency bands, a handover indicator, and the like) to the network charging system 135, which can determine the charges for the data usage and charge them to the correct user based on a session identifier, which identifies the session regardless of whether the data is transmitted in the licensed or unlicensed frequency band.

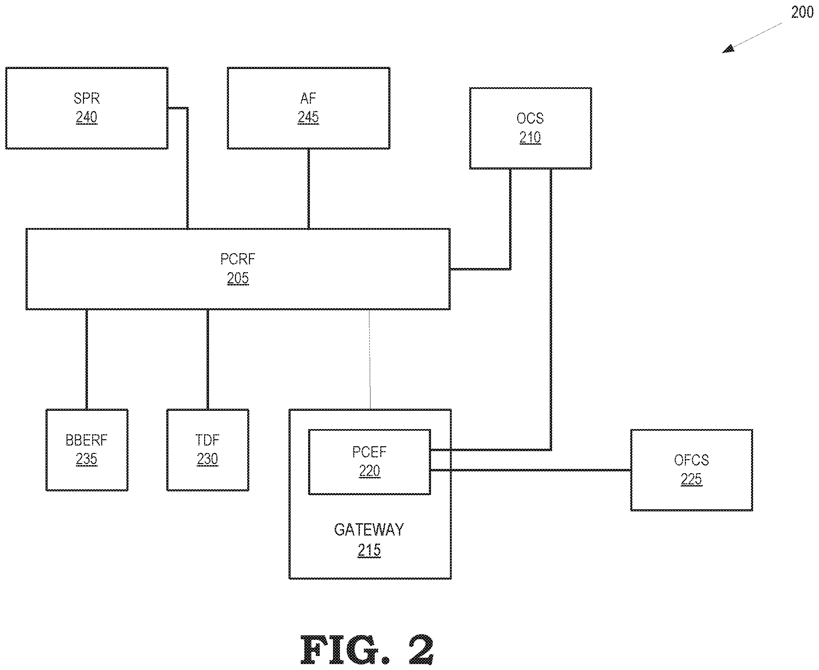

FIG. 2 is a block diagram of a network charging system 200 according to some embodiments. The network charging system 200 may be used to implement some embodiments of the network charging system 135 shown in FIG. 1. The network charging system 200 is used to determine a charge or an amount of money that is billed to an end-user. The architecture of the network charging system 200 may be defined according to the policy and charging control reference architecture defined by 3GPP TS 23.203, "Technical Specification Group Services and System Aspects, Policy and charging control architecture." However, other embodiments of the network charging system 200 may be defined according to other reference architectures.

The network charging system 200 includes a policy control and charging rules function (PCRF) 205 that performs policy control decision-making and flow based charging control. An online charging system (OCS) 210 can provide data usage tariffs or policies to the PCRF 205 to indicate the data usage tariffs for licensed and unlicensed frequency bands such as LTE-L and LTE-U. The OCS 210 may provide the information in either a push mode (*e.g*., without a specific request from the PCRF 205) or a pull mode (*e.g*., in response to a request from the PCRF 205). The charging policies may be determined based on a subscriber's charging account or an account associated with a group of subscribers. The data usage tariff for the unlicensed frequency band may be much lower than the data usage tariff for the licensed frequency band. However, some embodiments of the OCS 210 may determine the data usage tariffs based on other factors such as network traffic, location of the user equipment, quality of service, and the like. Thus, the data usage tariff for the unlicensed frequency band may in some cases be higher than the data usage tariff for the licensed frequency band.

The network charging system 200 also includes a gateway 215 such as a serving gateway (SGW) or a mobility management entity (MME) that is connected to the PCRF 205. The gateway 215 may be used to support communication between the network charging system 200 and base stations, eNodeBs, small cells, and the like. The gateway 215 includes a policy and charging enforcement function (PCEF) 220 that performs dataflow detection, policy enforcement, and flow-based charging. The OCS 210 may be connected to the PCEF 220 to provide policy information used by the PCEF 220. An off-line charging system (OFCS) 225 is also included in the network charging system 200 and is connected to the PCEF 220 to provide policies for off-line charging.

A traffic detection function (TDF) 230 performs application detection and reporting of detected applications. The TDF 230 also provides service data flow descriptors to the PCRF 205. A bearer binding and event reporting function (BBERF) 235 is used to perform bearer binding and binding verification, as well as providing event reporting to the PCRF 205. A subscription profile repository (SPR) 240 contains all subscriber/subscription related information needed for subscription-based policies. The SPR 240 also stores information indicating IP-CAN bearer level rules used by the PCRF 205. An application function (AF) 245 offers applications that may require dynamic policy or charging control. The AF 245 can communicate with the PCRF 205 to transfer dynamic session information to the PCRF 205.

Some embodiments of the PCRF 205 are configured to provide charging policies to base stations such as the small cell 115 shown in FIG. 1. The PCRF 205 may generate the charging policies based on conditions in the base station such as conditions that may be detected by the TDF 230. The PCRF 205 may provide the charging policies to the base station during establishment of the IP-CAN bearers between the base station and user equipment (such as the user equipment 120 shown in FIG. 1). For example, the PCRF 205 may provide the charging policies to the gateway 215, which may forward the charging policies to an eNodeB (such as the eNodeB 105 shown in FIG. 1) for transmission to the base station. The gateway 215 may also provide the charging policies directly to the base station in some embodiments. The PCRF 205 may statically configure the base stations based on information provided by the service providers or the base stations may be dynamically configured, *e.g.* in response to changes in data service criteria as discussed below.

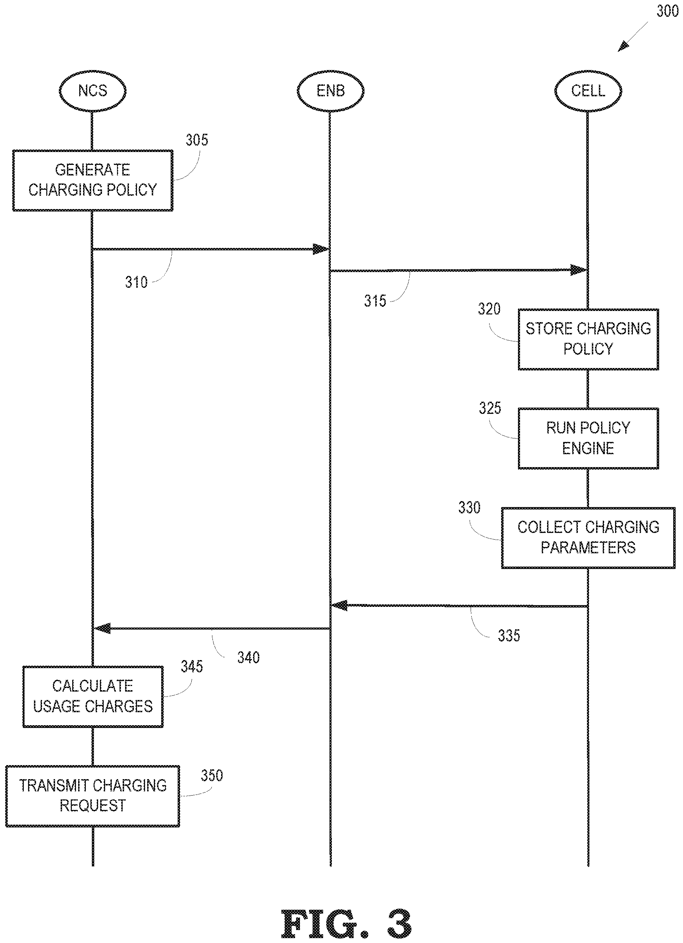

FIG. 3 is a flow diagram of a method 300 for differential charging for data usage in licensed and unlicensed frequency bands according to some embodiments. The method 300 includes actions performed by a network charging system (NCS), an eNodeB, and a cell, as well as messages or signals transmitted between these entities. The method 300 may be implemented in embodiments of the network charging system 135, the eNodeB 105, and the small cell 115 shown in FIG. 1. At block 305, the network charging system generates a charging policy that includes data usage tariffs for licensed and unlicensed frequency bands. Some embodiments of the charging policy may be determined based on data service criteria associated with the licensed or unlicensed frequency bands. For example, the charging policy may be determined based on data usage tariffs associated with the licensed and unlicensed frequency bands so that the band with a lower data usage tariff is preferred. For another example, the charging policy may be determined by a signal-to-noise ratio (SNR) so that user equipment operating according to the charging policy may be handed over between the licensed frequency band and the unlicensed frequency band depending on the SNR characteristics of the bands. The charging policy may also be determined based on a speed of the user equipment to avoid unnecessarily frequent handovers for user equipment moving at high speeds, security criteria, energy efficiency based on proximity, a location of the user equipment, or ownership of the small cell. Embodiments of the charging policy may combine or weight the data service criteria discussed herein in any combination.

The network charging system transmits (at 310) a signal or message including information defining the charging policy to the eNodeB, which then forwards (at 315) the signal or message to the small cell. The signal or message may be forwarded to the small cell using a wireless connection over an air interface or using a wired connection. In some embodiments, it may not be necessary to transmit the signal or message to the eNodeB if a different connection is available between the network charging system and the small cell. At block 320, the small cell stores the information defining the charging policy.

At block 325, the small cell runs a policy engine to determine how to selectively allocate licensed or unlicensed frequency bands to user equipment based on the stored charging policy. Some embodiments of the small cell may selectively allocate the licensed or unlicensed frequency bands based on a comparison of the data usage tariffs for the corresponding bands. For example, the small cell can allocate the unlicensed frequency band for best effort data transmission when the data usage tariff for best effort traffic over the unlicensed frequency band is lower than the data usage tariff for best effort traffic over the licensed frequency band. For another example, the small cell may hand off the best effort data transmission from the licensed frequency band to the unlicensed frequency band in response to changes in data service criteria such as the data usage tariffs or the SNRs of the corresponding bands. Some embodiments of the small cell may verify that the expiration timer for the charging policy has not expired prior to selectively allocating the licensed or unlicensed frequency bands. The small cell may not selectively allocate the licensed or unlicensed frequency bands if the expiration timer has expired. Once the small cell has selectively allocated the licensed or unlicensed frequency bands to the user equipment, the small cell and the user equipment begin communication over the allocated licensed or unlicensed frequency bands.

At block 330, the small cell collects charging parameters associated with data transmission over the selectively allocated licensed or unlicensed frequency bands. The charging parameters for data usage in the licensed and unlicensed frequency bands are associated with a single session identifier that identifies the session between the small cell and the user equipment. The charging parameters collected by the small cell indicate the amount of data transmitted over the licensed or unlicensed frequency bands and may include an operating mode in the unlicensed frequency band such as supplemental downlink or carrier aggregation. The charging parameters may also include a deployment mode such as indoor, outdoor, standalone cell, small cell integrated within the eNodeB, or small cell integrated with a Wi-Fi access point. The charging parameters may further include a core network type, one or more channels of the licensed or unlicensed frequency bands, one or more sub-bands within the licensed or unlicensed frequency bands, or an indicator of a handover between the licensed and unlicensed frequency bands. The handover indicator may indicate a source frequency band, a target frequency band, and a time at which the handover occurred.

The small cell transmits (at 335) a signal or message including the collected charging parameters to the eNodeB, which forwards (at 340) the signal or message to the network charging system. For example, a signal or message may be transmitted to a gateway at the network charging system such as the gateway 215 shown in FIG. 2. The signal or message may be transmitted to the eNodeB using a wireless connection over an air interface or using a wired connection. In some embodiments, it may not be necessary to transmit the signal or message to the eNodeB if a different connection is available between the network charging system and the small cell.

At block 345, the network charging system calculates data usage charges for the session indicated by the session identifier in signals or messages received from the small cell. For example, the network charging system may calculate the data usage charges based on the charging parameters collected by the small cell and forwarded to the network charging system. The network charging system may calculate data usage charges based on parameters or policies requested from an online charging system, which may rate the data usage according to charging plans it provided by a service provider. At block 350, the network charging system transmits a charging request that indicates the data usage charges for the session.

Embodiments of the method 300 may be performed at initiation of a session between the small cell and the user equipment, at predetermined time intervals, or in response to changes in data service criteria. For example, a change in the SNR for the licensed or unlicensed frequency bands may trigger performance of the method 300. The network charging system may then revise the charging policy in response to the change in the data service criteria and provide the revised charging policy to the small cell. The small cell may also run its policy engine, selectively allocate licensed or unlicensed frequency bands, and collect/report charging parameters based on the revised charging policy or the changed data service criteria.

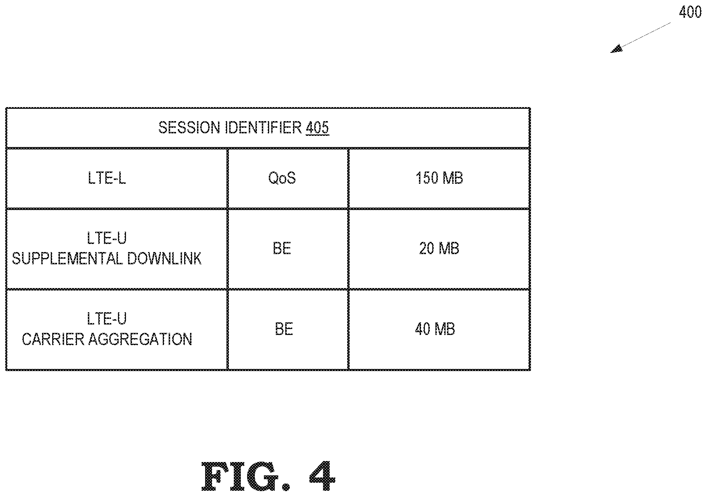

FIG. 4 is a block diagram of a message 400 that may be transmitted between a small cell and a network charging system according to some embodiments. The message 400 may be transmitted between a small cell (such as the small cell 115 shown in FIG. 1) and a network charging system (such as the network charging system 135 shown in FIG. 1) to convey charging parameters collected by the small cell. The message 400 is labeled with a session identifier 405 that indicates a session between the small cell and user equipment. Charges for data usage over licensed and unlicensed frequency bands during the session can therefore be associated with the user equipment or the corresponding user/subscriber based on the single session identifier 405.

The message 400 indicates data usage in the licensed frequency band (LTE-L) and unlicensed frequency band (LTE-U). The data usage may be further subdivided based on the operational mode of the unlicensed frequency band, such as supplemental downlink or carrier aggregation. The message 400 also indicates whether the data usage was at a quality-of-service (QoS) level or best effort (BE). For example, the message 400 indicates that 150 MB of data were used to provide QoS service to the user equipment in the licensed frequency band, 20 MB of data were used to provide best effort service in the unlicensed frequency band in the supplemental downlink mode, and 40 MB of data were used to provide best effort service in the unlicensed frequency band in the carrier aggregation mode.

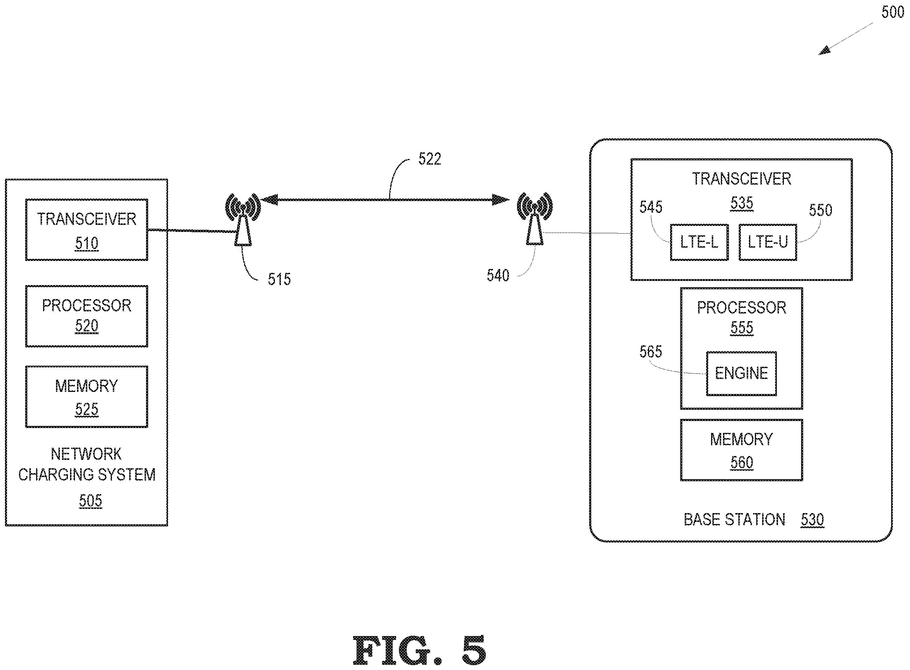

FIG. 5 is a block diagram of a wireless communication system 500 according to some embodiments. The communication system 500 includes a network charging system 505 that generates and provides charging policies to entities in the wireless communication system 500. Some embodiments of the network charging system 505 may be used to implement the network charging system 135 shown in FIG. 1 or the network charging system 200 shown in FIG. 2. The network charging system 505 includes a transceiver 510 for transmitting and receiving signals. For example, the network charging system 505 may generate charging policies and provide them to an eNodeB 515 for wired or wireless transmission to other entities. The network charging system 505 also includes a processor 520 and a memory 525. The processor 520 may be used to execute instructions stored in the memory 525 and to store information in the memory 525 such as the results of the executed instructions. Some embodiments of the processor 520 and the memory 525 may be configured to perform portions of the method 300 shown in FIG. 3.

The communication system 500 also includes a base station 530, which may be used to implement embodiments of the small cell 115 shown in FIG. 1. The base station 530 includes a transceiver 535 for transmitting and receiving signals via antenna 540. Some embodiments of the transceiver 535 include multiple radios for communicating according to different radio access technologies such as a radio 545 for communication in licensed LTE frequency bands (LTE-L) and a radio 550 for communication in unlicensed LTE frequency bands (LTE-U). For example, the LTE-L radio 545 may be used to communicate with user equipment in the licensed frequency band and the LTE-U radio 550 may be used to communicate with user equipment in the unlicensed frequency band. The base station 530 may also communicate with the eNodeB 515 over a wired or wireless communication link 555. For example, the base station 530 may receive charging policies generated by the network charging system 505 from the eNodeB 515 over the communication link 522.

The base station 530 also includes a processor 555 and a memory 560. The processor 555 may be used to execute instructions stored in the memory 560 and to store information in the memory 560 such as the results of the executed instructions. Some embodiments of the processor 555 and the memory 560 may be configured to perform portions of the method 300 shown in FIG. 3. For example, the processor 555 may implement a policy engine 565 that is used to selectively allocate licensed or unlicensed frequency bands (*e.g.*, to selectively control operation of the radios 545, 550) based on a charging policy provided by the network charging server 505 and stored in the memory 560.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications within the scope defined by the appended claims, are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter if staying within the scope defined by the appended claims. Accordingly, the protection sought herein is as set forth in the claims below.

## Claims

1. A method for supporting differential charging for data usage in licensed and unlicensed frequency bands, the method comprising:
receiving (315), at a base station (115) that provides wireless connectivity on a primary carrier (122) that is anchored in a licensed frequency band and on a secondary carrier (123) in an unlicensed frequency band, a charging policy indicating data usage tariffs for the licensed frequency band and the unlicensed frequency band, wherein the primary carrier (122) is configured to carry control data for the secondary carrier (123);
selectively allocating, at the base station (115), the secondary carrier (123) in the unlicensed frequency band to user equipment (120) for carrier aggregation with the primary carrier (122) based on the data usage tariffs; **characterized in that** the method further comprises:
handing over, at the base station (115), best effort data transmission from the primary carrier (122) to the secondary carrier (123) in response to the data usage tariff for the unlicensed frequency band being less than the data usage tariff for the licensed frequency band; and
transmitting (335, 340), by the base station (115), to a network charging system (135) a message including charging parameters, collected by the base station (115), for data usage in the licensed frequency band and the unlicensed frequency band and a session identifier for a session involving the licensed frequency band and the unlicensed frequency band.

2. The method of claim 1, wherein receiving (315) the charging policy comprises receiving a charging policy indicating an expiration time for the data usage tariffs.

3. The method of claim 1, further comprising:
collecting (330), by the base station (115), the charging parameters for data usage in the licensed frequency band and the unlicensed frequency band; and
generating the message including the charging parameters for the licensed frequency band and the unlicensed frequency band and a session identifier for a session involving the licensed frequency band and the unlicensed frequency band.

4. A non-transitory computer readable medium (560) embodying a set of executable instructions, the set of executable instructions when run by a processor (555) associated with a base station (530) that provides wireless connectivity on a primary carrier (122) that is anchored in a licensed frequency band and a secondary carrier (123) in an unlicensed frequency band, cause the base station (530) to:
receive (315) a charging policy indicating data usage tariffs for the licensed frequency band and the unlicensed frequency band, wherein the primary carrier (122) is configured to carry control data for the secondary carrier (123); and
selectively allocate the secondary carrier (123) in the unlicensed frequency band to user equipment (120) for carrier aggregation with the primary carrier (122) based on the data usage tariffs;
**characterized in that** the set of executable instructions to manipulate the processor (555) to cause the base station (530) to:
hand over best effort data transmission from the primary carrier (122) to the secondary carrier (123) in response to a data usage tariff for the unlicensed frequency band being less than a data usage tariff for the licensed frequency band; and
transmit (335, 340) to a network charging system (135) a message including charging parameters, collected by the base station (115), for data usage in the licensed frequency band and the unlicensed frequency band and a session identifier for a session involving the licensed frequency band and the unlicensed frequency band.

5. The non-transitory computer readable medium (560) of claim 4, wherein the set of executable instructions when run by the processor (555) further cause the base station (530) to:
collect (330) the charging parameters for data usage in the licensed frequency band and the unlicensed frequency band; and
generate the message including the charging parameters for the licensed frequency band and the unlicensed frequency band and a session identifier for a session involving the licensed frequency band and the unlicensed frequency band.

## Patentansprüche

1. Verfahren zum Unterstützen einer differenziellen Vergebührung zur Datennutzung in lizenzierten und unlizenzierten Frequenzbändern, wobei das Verfahren umfasst:
Empfangen (315), an einer Basisstation (115), die eine drahtlose Anbindung auf einem primären Träger (122) bereitstellt, der in einem lizenzierten Frequenzband verankert ist, und auf einem zweiten Träger (123) in einem unlizenzierten Frequenzband, einer Vergebührungsrichtlinie, welche Datennutzungstarife für das lizenzierte Frequenzband und das unlizenzierte Frequenzband angibt, wobei der primäre Träger (122) dafür ausgelegt ist, Steuerungsdaten für den sekundären Träger (123) zu transportieren;
selektives Zuteilen, an der Basisstation (115), des sekundären Trägers (123) in dem unlizenzierten Frequenzband zu Benutzer-Equipment (120) für eine Trägeraggregation mit dem primären Träger (122) basierend auf den Datennutzungstarifen;
**dadurch gekennzeichnet, dass** das Verfahren ferner umfasst: Übergeben, an der Basisstation (115), einer "Best Effort"-Datenübertragung von dem primären Träger (122) an den sekundären Träger (123) in Reaktion darauf, dass der Datennutzungstarif für das unlizenzierte Frequenzband niedriger ist als der Datennutzungstarif für das lizenzierte Frequenzband; und
Übertragen(335, 340), von der Basisstation (115) an ein Netzvergebührungssystem (135), einer Nachricht mit Vergebührungsparametern, gesammelt von der Basisstation (115), für eine Datennutzung in dem lizenzierten Frequenzband und dem unlizenzierten Frequenzband und einer Sitzungskennung für eine Sitzung, die das lizenzierte Frequenzband und das unlizenzierte Frequenzband beinhaltet.

2. Verfahren nach Anspruch 1, wobei das Empfangen (315) der Vergebührungsrichtlinie das Empfangen einer Vergebührungsrichtlinie umfasst, die eine Ablaufzeit für die Datennutzungstarife angibt.

3. Verfahren nach Anspruch 1, ferner umfassend:
Sammeln (330), durch die Basisstation (115), der Vergebührungsparameter für eine Datennutzung in dem lizenzierten Frequenzband und dem unlizenzierten Frequenzband; und
Generieren der Nachricht mit den Vergebührungsparametern für das lizenzierte Frequenzband und das unlizenzierte Frequenzband und einer Sitzungskennung für eine Sitzung, die das lizenzierte Frequenzband und das unlizenzierte Frequenzband beinhaltet.

4. Nicht-transitorisches computerlesbares Medium (560), auf dem ein Satz von ausführbaren Anweisungen enthalten ist, wobei der Satz von ausführbaren Anweisungen, wenn er von einem Prozessor (555) ausgeführt wird, der mit einer Basisstation (530) verknüpft ist, die eine drahtlose Anbindung an einen primären Träger (122) bereitstellt, der in einem lizenzierten Frequenzband verankert ist, und einen sekundären Träger (123) in einem unlizenzierten Frequenzband, die Basisstation (530) hierzu veranlasst:
Empfangen (315) einer Vergebührungsrichtlinie, die Datennutzungstarife für das lizenzierte Frequenzband und das unlizenzierte Frequenzband angibt, wobei der primäre Träger (122) dafür ausgelegt ist, Steuerungsdaten für den sekundären Träger (123) zu transportieren; und
selektives Zuteilen des sekundären Trägers (123) in dem unlizenzierten Frequenzband zu Benutzer-Equipment (120) für eine Trägeraggregation mit dem primären Träger (122) basierend auf den Datennutzungstarifen;
**dadurch gekennzeichnet, dass** der Satz von ausführbaren Anweisungen zum Manipulieren des Prozessors (555) die Basisstation (530) hierzu veranlasst:
Übergeben einer "Best Effort"-Datenübertragung von dem primären Träger (122) an den sekundären Träger (123) in Reaktion darauf, dass ein Datennutzungstarif für das unlizenzierte Frequenzband niedriger ist als ein Datennutzungstarif für das lizenzierte Frequenzband; und
Übertragen (335, 340), an ein Netzvergebührungssystem (135), einer Nachricht mit Vergebührungsparametern, gesammelt von der Basisstation (115), für eine Datennutzung in dem lizenzierten Frequenzband und dem unlizenzierten Frequenzband und einer Sitzungskennung für eine Sitzung, die das lizenzierte Frequenzband und das unlizenzierte Frequenzband beinhaltet.

5. Nicht-transitorisches computerlesbares Medium (560) nach Anspruch 4, wobei der Satz von ausführbaren Anweisungen bei Ausführung durch den Prozessor (555) die Basisstation (530) ferner hierzu veranlasst:
Sammeln (330) der Vergebührungsparameter für eine Datennutzung in dem lizenzierten Frequenzband und dem unlizenzierten Frequenzband; und
Generieren der Nachricht mit den Vergebührungsparametern für das lizenzierte Frequenzband und das unlizenzierte Frequenzband und einer Sitzungskennung für eine Sitzung, das das lizenzierte Frequenzband und das unlizenzierte Frequenzband beinhaltet.

## Revendications

1. Procédé pour prendre en charge une facturation différentielle pour un usage de données dans des bandes de fréquence avec licence et sans licence, le procédé comprenant :
la réception (315), dans une station de base (115) qui fournit une connectivité sans fil sur une porteuse primaire (122) qui est ancrée dans une bande de fréquence avec licence et sur une porteuse secondaire (123) dans une bande de fréquence sans licence, d'une politique de facturation indiquant des tarifs d'usage de données pour la bande de fréquence avec licence et la bande de fréquence sans licence, dans lequel la porteuse primaire (122) est configurée pour porter des données de commande pour la porteuse secondaire (123) ;
l'attribution sélective, dans la station de base (115), de la porteuse secondaire (123) dans la bande de fréquence sans licence à un équipement utilisateur (120) pour une agrégation de porteuses avec la porteuse primaire (122) sur la base des tarifs d'usage de données ; **caractérisé en ce que** le procédé comprend en outre :
le transfert, dans la station de base (115), d'une transmission de données de meilleur effort depuis la porteuse primaire (122) à la porteuse secondaire (123) en réponse au fait que le tarif d'usage de données pour la bande de fréquence sans licence est inférieur au tarif d'usage de données pour la bande de fréquence avec licence ; et
la transmission (335, 340), par la station de base (115), à un système de facturation de réseau (135), d'un message incluant des paramètres de facturation, collectés par la station de base (115), pour l'usage de données dans la bande de fréquence avec licence et la bande de fréquence sans licence et un identifiant de session pour une session impliquant la bande de fréquence avec licence et la bande de fréquence sans licence.

2. Procédé selon la revendication 1, dans lequel la réception (315) de la politique de facturation comprend la réception d'une politique de facturation indiquant un temps d'expiration pour les tarifs d'usage de données.

3. Procédé selon la revendication 1, comprenant en outre :
la collecte (330), par la station de base (115), des paramètres de facturation pour l'usage de données dans la bande de fréquence avec licence et la bande de fréquence sans licence ; et
la génération du message incluant les paramètres de facturation pour la bande de fréquence avec licence et la bande de fréquence sans licence et un identifiant de session pour une session impliquant la bande de fréquence avec licence et la bande de fréquence sans licence.

4. Support non transitoire lisible par ordinateur (560) incorporant un ensemble d'instructions exécutables, l'ensemble d'instructions exécutables, lorsqu'elles sont exécutées par un processeur (555) associé à une station de base (530) qui fournit une connectivité sans fil sur une porteuse primaire (122) qui est ancrée dans une bande de fréquence avec licence et une porteuse secondaire (123) dans une bande de fréquence sans licence, faisant en sorte que la station de base (530) :
reçoive (315) une politique de facturation indiquant des tarifs d'usage de données pour la bande de fréquence avec licence et la bande de fréquence sans licence, dans lequel la porteuse primaire (122) est configurée pour porter des données de commande pour la porteuse secondaire (123) ; et
attribue sélectivement la porteuse secondaire (123) dans la bande de fréquence sans licence à un équipement utilisateur (120) pour une agrégation de porteuses avec la porteuse primaire (122) sur la base des tarifs d'usage de données ;
**caractérisé en ce que** l'ensemble d'instructions exécutables pour manipuler le processeur (555) font en sorte que la station de base (530) :
transfère une transmission de données de meilleur effort depuis la porteuse primaire (122) à la porteuse secondaire (123) en réponse au fait qu'un tarif d'usage de données pour la bande de fréquence sans licence est inférieur à un tarif d'usage de données pour la bande de fréquence avec licence ; et
transmette (335, 340), à un système de facturation de réseau (135), un message incluant des paramètres de facturation collectés par la station de base (115), pour l'usage de données dans la bande de fréquence avec licence et la bande de fréquence sans licence et un identifiant de session pour une session impliquant la bande de fréquence avec licence et la bande de fréquence sans licence.

5. Support non transitoire lisible par ordinateur (560) selon la revendication 4, dans lequel l'ensemble d'instructions exécutables, lorsqu'elles sont exécutées par le processeur (555), font en outre en sorte que la station de base (530) :
collecte (330) les paramètres de facturation pour l'usage de données dans la bande de fréquence avec licence et la bande de fréquence sans licence ; et
génère le message incluant les paramètres de facturation pour la bande de fréquence avec licence et la bande de fréquence sans licence et un identifiant de session pour une session impliquant la bande de fréquence avec licence et la bande de fréquence sans licence.
